Europäisches Patentamt

European Patent Office

Office européen des brevets

(19)

(11) Publication number: **0 026 061**

A1

(12) **EUROPEAN PATENT APPLICATION**

(21) Application number: **80303092.3**

(22) Date of filing: **04.09.80**

(51) Int. Cl.³: **B 60 M 1/26**
**F 16 F 9/06**

(30) Priority: **21.09.79 GB 7932734**

(43) Date of publication of application:
**01.04.81 Bulletin 81/13**

(84) Designated Contracting States:
**AT BE DE FR IT NL SE**

(71) Applicant: **AUTOMOTIVE PRODUCTS LIMITED**
**Tachbrook Road**
**Leamington Spa Warwickshire CV31 3ER(GB)**

(72) Inventor: **Anderson, Brian Christopher**
**20 Zig Zag Road**
**Liverpool L12 9EQ(GB)**

(54) **Cable tensioning device.**

(57) A cable tensioning device includes a telescopic pneumatic cylinder assembly comprising a housing (11,12) containing in series a ramrod (15), a hydraulic liquid chamber (22), a piston (25) and a gas chamber (24); the gas chamber (24) being chargeable with gas under pressure to bias the ramrod (15) out of the housing (11,12). The piston (25) includes valve means (37) which open to vent excess fluid pressure should the fluid pressure in liquid chamber (22) exceed that in the gas chamber (24).

./...

EP 0 026 061 A1

Croydon Printing Company Ltd.

FIG.1.

## "Cable Tensioning Device"

This invention relates to a cable tensioning device including a telescopic cylinder assembly particularly, though not exclusively for use in cable tensioning devices in electric railway overhead wire systems. It is desirable that such assemblies compensate for ambient temperature changes to maintain a substantially constant wire tension. Assemblies of this type are described in our British Patent Applications Nos. 25776/77 and 25777/77.

The cable tensioning device described in those specifications includes a cylinder assembly having an annular chamber which is kept filled with liquid to maintain the ram rod seal effective for long periods of service. A floating piston is provided to separate this liquid chamber from the pressurised gas chamber. These tensioning devices have enjoyed considerable commercial success but suffer from the disadvantage that, under certain conditions of use, a differential fluid pressure can be created across the floating piston resulting in undesirable changes in load exerted by the cylinder assembly.

It is an object of the present invention to provide a cable tensioning device having a telescopic pneumatic cylinder which overcomes the above disadvantage to provide a substantially constant load for the working life of the cylinder.

According to the invention there is provided a cable tensioning device including a telescopic pneumatic cylinder assembly comprising a housing containing in series a ramrod, a hydraulic liquid chamber, a piston and a gas chamber; said gas chamber being chargeable with gas under pressure to load said ramrod through said piston and said hydraulic liquid chamber, characterised thereby that the piston includes valve means operable under the action of a differential pressure across the piston to vent the hydraulic liquid chamber to the gas chamber should fluid pressure in the liquid chamber exceed the fluid pressure in the gas chamber.

Other features of the invention are included in the following description of a preferred embodiment shown by way of example, on the accompanying drawings in which:-

Fig. 1 is a transverse section through the telescopic cylinder of a cable tensioner according to the invention;

Fig. 2 is a side view of the cable tensioner of Fig. 1 and showing the tensioning linkage; and

Fig. 3 is a top view of the cable tensioner of Fig. 2.

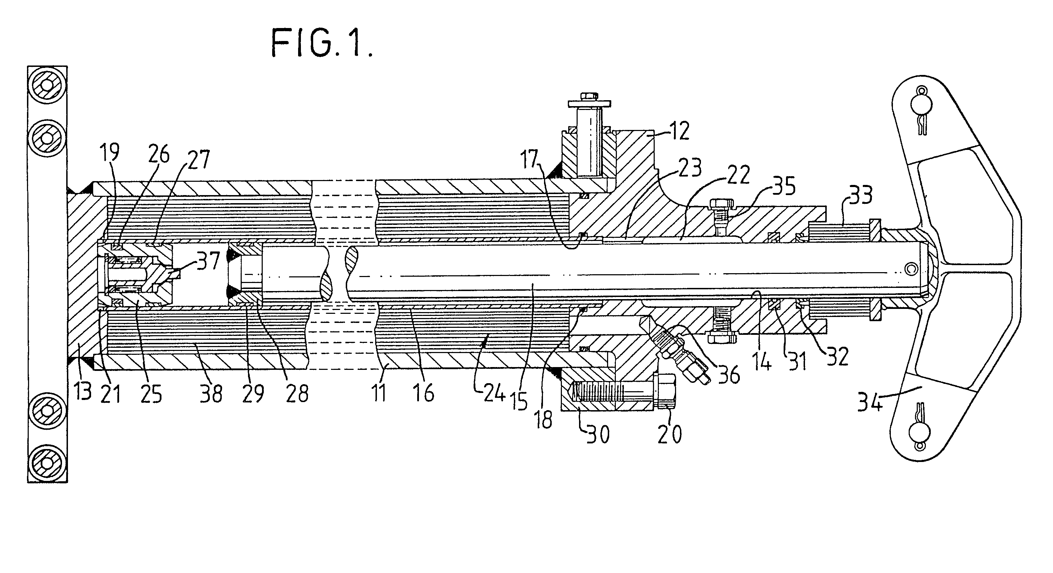

With reference to Fig. 1 of the accompanying drawings there is shown a pneumatic cylinder assembly which includes an outer cylinder 11, one end of which is closed by a guide housing 12 and the other end by an end plug 13. The end plug 13 is secured to the outer cylinder 11 by welding whereas the guide housing 12 is secured by set bolts 20 to a ring 30 which is welded to the outer cylinder 11. The guide housing 12 incorporates a through bore 14 in which is slidable a ramrod 15. An inner cylinder 16 spigots at one end into a counterbore 17 in the guide housing 12 where it is sealed by an 'O' ring 18 so that it extends between the guide housing and the end plug 13 where it locates with a clearance fit in a recess 19. The inner cylinder has castellations 21 at the end which locates in recess 19, but their purpose will be described later.

The through bore 14 in the guide housing 12 is interrupted by an annular sealing chamber 22 which encircles the ramrod 15. This sealing chamber 22 communicates via a passage 23 with the interior of the inner cylinder 16. In use, the sealing chamber 22 is filled with oil which is separated from a charge of gas in a charging chamber 24 defined by the outer cylinder 11, the end plug 13 and the guide housing 12, by a separator piston 25. The separator piston 25 has a sealing ring 26 and a bearing ring 27.

A spring non-return valve 37 is incorporated in the separator piston 25 and is arranged such that contact between the piston 25 and the ramrod 15 will open the valve to allow fluid communication between the sealing chamber 22 and the charging chamber 24. Excess fluid pressure in the sealing chamber 22 over that in the charging chamber 24 will also act to open the non-return valve 37.

To prevent the ramrod 15 sliding out of the guide housing 12, a head 28 is welded to the inner end. This head 28 is a sliding fit in the inner cylinder 16 and has a bearing ring 29 similar to bearing ring 27. The bearing rings 27 and 29 are of a plastics material and are slit axially or diagonally in the manner of piston rings. Hence oil from chamber 22 is not prevented from communicating with the separator piston 25 but the bearing ring 29 acts to restrict flow past the head 28.

The guide housing 12 has a pressure seal ring 31 to seal between the ramrod 15 and bore 14, the seal being wetted by oil in chamber 22 and thus remaining effective over a long period of service. A dirt scraper seal 32 protects the seal 31 from dirt and water, the presence of which is minimised by a spirally wound steel spring sheet which acts between the guide housing 12 and a collar of the yoke 34 carried on the end of the ramrod 15.

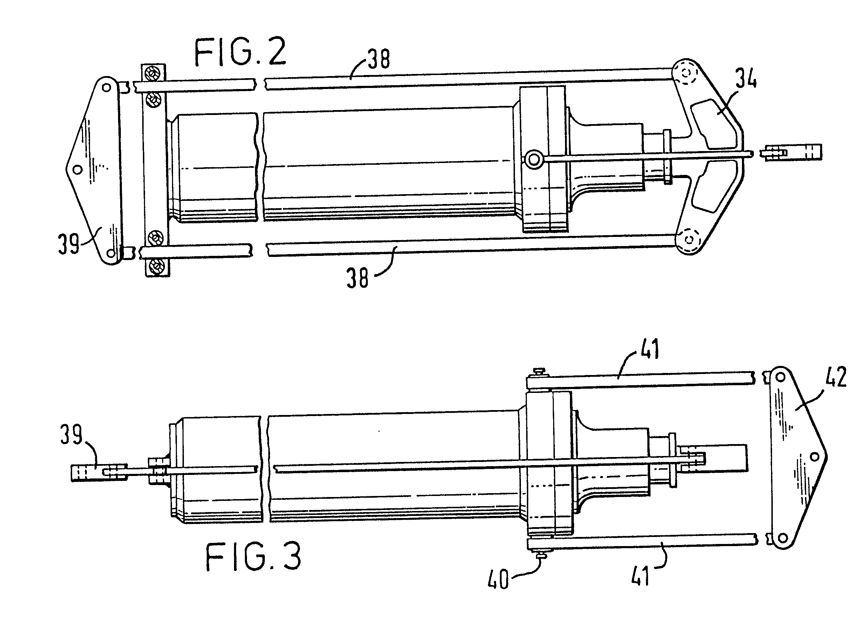

With additional reference to Figs. 2 and 3 a framework is provided about the cylinder to adapt the thrust of the charged cylinder into a tensile force for tensioning a cable.

The yoke 34 is coupled to a fixed gantry through a rectangular framework comprising tie bars 38 and plate 39. A second framework including tie bars 41 and plate 42 is connected between the cable to be tensioned and trunnions 40 attached to the cylinder body. This framework is further described in our British Patent 1 137 081.

In use the ramrod 15 acts as a piston member, the thrust being created by virtue of the gas pressure from chamber 24 being transmitted to the oil through the separator piston 25 so that the effective working diameter is that of the ramrod 15. If the cable under tension snaps, the ramrod is prevented from being driven out by the high potential energy of the stored gas in chamber 24 by the restriction on gas flow given by the castellations 21 and by the restriction on oil flow given by the ramrod head 28. Furthermore any large pressure drop between the charging chamber 24 and the interior of the inner cylinder 16 will tend to deform the inner cylinder 16 radially so as to grip the ramrod head 28 and the separator piston 25 and provide friction damping.

The annular sealing chamber 22 is provided with tapping 35 which is used to inject a known quantity of oil into the chamber 22 and the interior of the cylinder 16 between the floating piston 25 and the ramrod 15. The charging chamber 24 is then charged with gas (e.g. nitrogen) through a second tapping 36 in the guide housing 12. The tapping 36 is shown out of true angular position for convenience.

To obtain the correct relationship between thrust, ramrod extension and ambient temperature it is important to control the volume of gas in chamber 24 as well as the charging pressure. Known tensioners use a quantity of oil for this purpose but since this usually has the disadvantage of absorbing some of the gas, solid material is used in the form of rods 38 made of polyvinylchloride.

In operation, the separator piston 25 floats in the inner cylinder to transmit the thrust from the gas in the charging chamber 24 through the sealing chamber oil to the ramrod 15. The ramrod extension will alter to compensate for changes in ambient temperature.

The non-return valve 37 will open to relieve excess oil pressure should leaking gas from the charging chamber 24 cause relative separation of the piston 25 and the ramrod 15 to an extent where the piston 25 abutted the end plug 13.

A further advantage of the non-return valve 37 is that should the sealing chamber fluid leak away in use, and allow the separator piston 25 to abut the ramrod 15, there would be a danger that thrust from the gas in the charging chamber 24 would act on the effective area of the separator piston 25 and not on the effective area of the ramrod 15. Such a case would again result in the undue stress of the cables under tension. The valve 37 has an extension to ensure that as the separator piston 25 and ramrod 15 approach, the valve opens to allow gas pressure to act in the sealing chamber on the ramrod 15. Hence the piston 25 and ramrod 15 never come into contact during the useful life of the cylinder and over-tensioning of the cables is avoided.

The spring sheet 33 acts as a positive return stop for the ramrod 15 under extreme low temperature conditions. If the ram is pushed into the cylinder beyond its low temperature position it will generate a pressure in the oil which will cause the valve 37 in the separator piston 25 to open and allow oil to pass into the charging chamber 24.

-1-

## Claims

1.      A cable tensioning device having a telescopic
pneumatic cylinder assembly comprising a housing
containing in series a ramrod, a hydraulic liquid
chamber, a piston and a gas chamber; said gas chamber
being chargeable with gas under pressure to load said
ramrod through said piston and said hydraulic liquid
chamber, characterised thereby that the piston includes
valve means operable under the action of a differential
pressure across the piston to vent the hydraulic
liquid chamber to the gas chamber should fluid pressure
in the liquid chamber exceed the fluid pressure in the
gas chamber.

2.      A tensioning device according to Claim 1,
characterised thereby that the valve member comprises
a resiliently loaded non-return valve.

3.      A tensioning device according to Claim 1 or
Claim 2, characterised thereby that the valve member
is mechanically operable should the piston approach
within a predetermined distance of the ramrod.

4.      A tensioning device according to Claim 3, characterised thereby that the valve member has an extension projecting from one face of the piston for co-operation with the adjacent face of the ramrod.

FIG.1.

FIG.2

34

38

38

39

FIG.3

41

42

39

40

41

# EUROPEAN SEARCH REPORT

European Patent
Office

Application number

EP 80 30 3092

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 172 555 (HOESCH)<br>* Page 2, line 69 - page 3, line 36; figure 4 *<br>--<br>FR - A - 2 185 093 (MESSIER-HIS-PANO)<br>* Page 5, lines 1-35; figure 1 *<br>& GB - A - 1 422 378<br>-- | 1,2<br><br><br>1 | B 60 M 1/26<br>F 16 F 9/06 |
| D | FR - A - 2 395 433 (AUTOMOTIVE)<br>* Page 5, lines 1-20; figures *<br>---- | 1 | TECHNICAL FIELDS SEARCHED (Int. Cl.³)<br><br>B 60 M 1/26<br>         1/234<br>H 02 G 7/02<br>F 16 F 9/52<br>         9/06 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&. member of the same patent family. corresponding document

The present search report has been drawn up for all claims

| Place of search | Date of completion of the search | Examiner |
|---|---|---|
| The Hague | 06-01-1981 | TIELEMANS |

EPO Form 1503.1   06.78